# EUROPÄISCHE PATENTSCHRIFT

(11) **EP 0 668 139 B1**
(45) Veröffentlichungstag und Bekanntmachung des Hinweises auf die Patenterteilung: **04.04.2001**
(21) Anmeldenummer: 94810098.7
(22) Anmeldetag: 21.02.1994
(51) Int. Cl.: B29C 44/00, B29C 47/64, B29C 47/80, B29B 9/06, B29K 25/00, B29K 105/26

(54) **Verfahren zum Herstellen von expandierfähigem Kunststoff-Granulat**
Process for preparing expandable plastic granules
Procédé pour la préparation de granules plastiques expansibles

(43) Veröffentlichungstag der Anmeldung: 23.08.1995
(73) Patentinhaber: Sulzer Chemtech AG, CH-8404 Winterthur (CH)
(72) Erfinder: Andreas, Walder, CH-8600 Dübendorf (CH)
(74) Vertreter: Sulzer Management AG

(56) Entgegenhaltungen:
- EP-A- 0 066 977
- EP-A- 0 079 012
- EP-A- 0 126 459
- EP-A- 0 445 847
- CA-A- 741 721
- GB-A- 1 062 307
- US-A- 3 817 669
- US-A- 4 201 480
- US-A- 5 000 891

## Beschreibung

Die Erfindung betrifft ein Verfahren zum Herstellen von expandierfähigem Kunststoff-Granulat und Einrichtungen sowie Anlagen zum Durchführen bzw. Verwenden des Verfahrens.

Ein häufig verwendeter Schaumstoff wird aus Polystyrol hergestellt. Dabei wird ein Granulat aus "expandierbarem Polystyrol", EPS, zu Blöcken oder Formteilen verarbeitet, wobei in einem Zwischenschritt das Granulat vorgeschäumt wird. EPS lässt sich durch eine Suspensionspolymerisation erzeugen. Bei diesem Verfahren wird Styrol in einer wässerigen Phase unter Zugabe eines Treibmittels polymerisiert. Es entsteht dabei ein perlförmiges Granulat, das einen breiten Perlgrössenbereich aufweist. Nachteilig bei diesem Verfahren ist, dass grosse Mengen an zu reinigendem Wasser anfallen und dass das Granulat nur in einem beschränkten Grössenbereich für die Schaumstoffherstellung verwendbar ist, so dass ein beträchtlicher Teil des erzeugten Polymerisats verworfen (oder rezykliert) werden muss.

Bei einem anderen Verfahren, das für die Herstellung von grossen Mengen an EPS wenig geeignet ist, wird das Polystyrol nach der Polymerisation mit einem Treibmittel in Druckbehältern oder in Extrudern imprägniert. Das Produkt ist ein Zylindergranulat.

Aus der GB-A- 1 062 307 sind ein Imprägnierverfahren gemäss dem Oberbegriff des Anspruchs 1 und eine Einrichtung gemäss dem Oberbegriff des Anspruchs 4 bekannt, bei der mit Extrudern das Treibmittel in die Kunststoffschmelze eingearbeitet wird. Die US-A- 3 817 669 offenbart eine Einrichtung, mit der ein entsprechendes Imprägnierverfahren unter Verwendung von statischen Mischelementen ("interfacial surface generator") durchführbar ist.

Weitere Angaben zu Schaumstoffen findet man in Ullmanns Encyklopädie der technischen Chemie (4. Auflage, 1981), Band 20, S. 415 bis 432 sowie Band 19, S. 268 und 131.

Es ist Aufgabe der Erfindung, ein Verfahren zur wirtschaftlichen Herstellung von expandierfähigem Kunststoff-Granulat, beispielsweise von EPS, zu schaffen, bei welchem grosse Mengen ohne die Nachteile der bekannten Verfahren erzeugt werden können. Bei diesem Verfahren soll eine Kunststoffschmelze mit einem fluiden Treibmittel imprägniert werden, das bei erhöhtem Druck in einem vorgegebenen Druckbereich nur teilweise in der Schmelze lösbar ist. Diese Aufgabe wird durch das Verfahren mit dem in Anspruch 1 angegebenen kennzeichnenden Merkmal gelöst. Das Verfahren kann mit einer Einrichtung gemäss Anspruch 6 oder in einer Anlage gemäss Anspruch 11 durchgeführt werden. Eine bevorzugte Verwendung einer derartigen Anlage (oder Einrichtung bzw. Verfahren) ist die Herstellung von EPS (Anspruch 13).

Grosse Mengen an EPS oder einem anderen, vergleichbaren Granulat können nicht mit Extrudern wirtschaftlich erzeugt werden, da eine Vielzahl von parallel eingesetzter Extrudern verwendet werden müsste. Durch die Verwendung der erfindungsgemässen Einrichtung, bei der die Imprägnierung der Kunststoffschmelze in einem einzigen Apparat durchführbar ist, ergibt sich ein wirtschaftlicher Vorteil. Die erfindungsgemässe Lehre beruht wesentlich auf der Erkenntnis, dass grosse Mengen an expandierfähigem Kunststoff-Granulat nur dann in einem Apparat herstellbar sind, wenn Massnahmen gegen ein Entmischen von Schmelze und Treibmittel möglich sind und vorgesehen werden. Gemäss der Erfindung wird mittels statischer Mischelemente während des gesamten Verfahrensdurchlaufs kontinuierlich auf das Gemisch eingewirkt, und zwar so, dass eine Entmischung verhindert wird.

Bezüglich den bekannten Verfahren mit Extrudern hat das erfindungsgemässe Verfahren den weiteren Vorteil, dass wesentlich weniger Energie - um rund eine Grössenordnung weniger - für die Herstellung des expandierfähigen Kunststoff-Granulats benötigt wird. Mit diesem Vorteil verbunden ist ein zweiter, dass nämlich während des Imprägnierens ein kleinerer Temperaturanstieg erfolgt. Somit muss auch weniger Wärme abgeführt werden.

Der abhängige Anspruch 2 bezieht sich auf eine vorteilhafte Ausführungsform des erfindungsgemässen Verfahrens. Es betrifft ein einfaches Verfahren für das Abkühlen des imprägnierten Gemisches sowie ein zweckmässiges Granulierverfahren. Durch das Merkmal des Anspruchs 3, nämlich neben dem Treibmittel ein oder mehrere Additive der Schmelze zuzumischen, kann die Qualität des Produkts vorteilhaft beeinflusst werden. Als Treibmittel wird ein Fluorchlorkohlenwasserstoff oder vorzugsweise ein niedrigsiedender Kohlenwasserstoff, insbesondere Pentan, oder ein Gemisch solcher Kohlenwasserstoffe verwendet. Als Additive kommen Flammschutzmittel (Bromverbindungen), Gleitmittel (Öle, Stearinsäurederivate), Farben, Antioxidatien, Weichmacher oder Keimbildner (für die Zellbildung) in Frage.

Die abhängigen Ansprüche 5 bis 12 beziehen sich auf vorteilhafte Ausführungsformen der erfindungsgemässen Einrichtung. Anspruch 13 betrifft eine Verwendungsmöglichkeiten der erfindungsgemässen Einrichtung.

Nachfolgend wird die Erfindung anhand der Zeichnungen näher erläutert. Es zeigen:
- Fig. 1: ein Blockschema zur Erläuterung der Anlage oder des Verfahrens gemäss der Erfindung,
- Fig. 2: ein qualitativ dargestellter Verlauf des Drucks p für die erfindungsgemässe Einrichtung,
- Fig. 3: den Druckverlauf einer zweiten Einrichtung und
- Fig. 4: ein Schema zu einer Anlage für die erfindungsgemässe Herstellung von EPS.

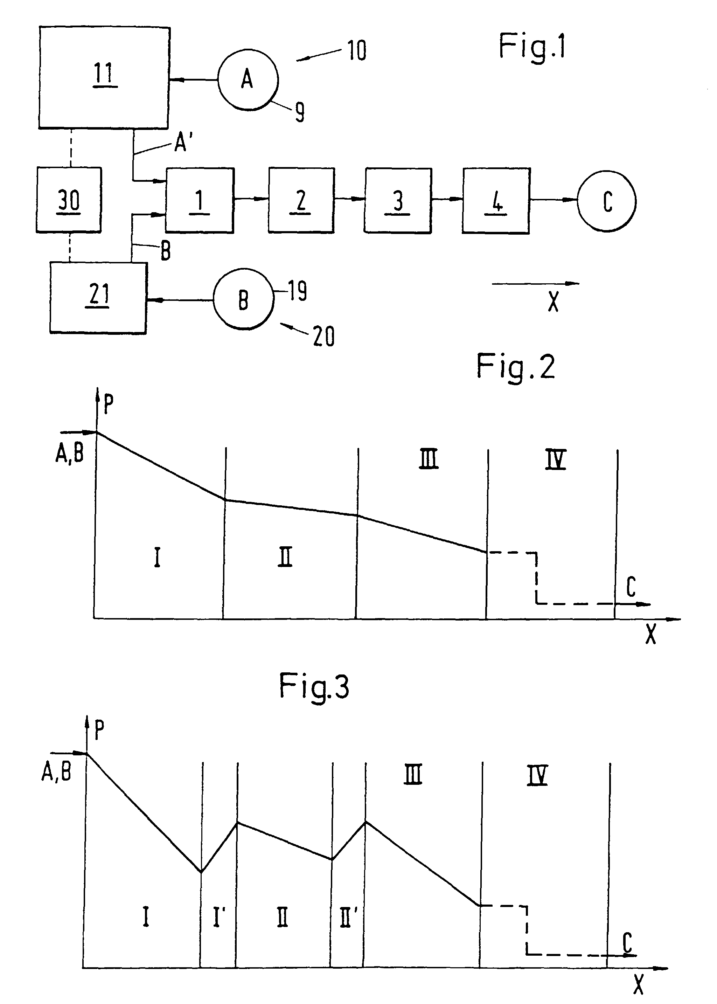

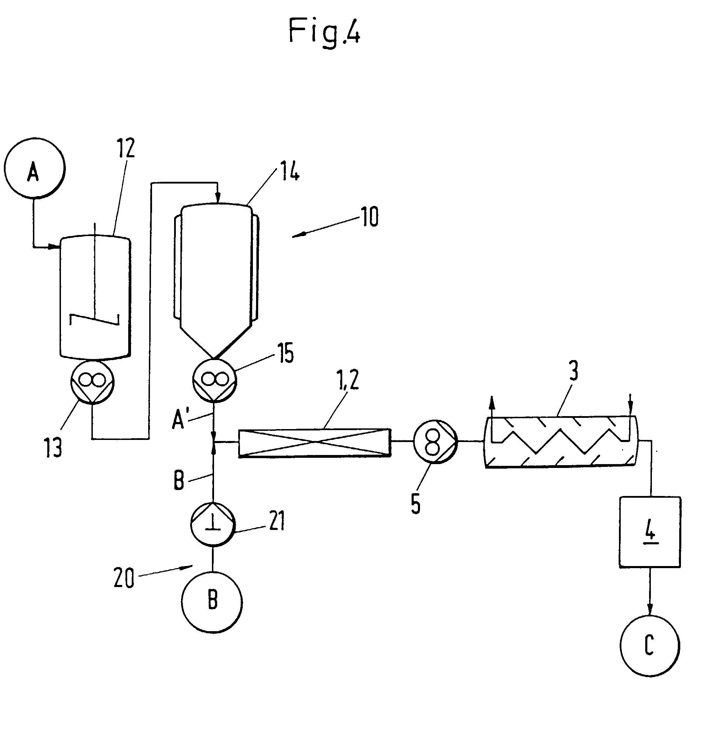

Im Blockschema der Fig.1 betreffen die Bezugszeichen 1 bis 4 die vier im Oberbegriff des Anspruchs 1 genannten Verfahrensschritte: Dispergieren (1), Halten (2), Abkühlen (3) und Granulieren (4). Diesen Verfahrensschritten entsprechen in den Druckdiagrammen der Figuren 2 und 3 die Intervalle I, II, III und IV. Indem die einzelnen Blöcke des Schemas in Fig. 1 als Einrichtungsteile interpretiert werden, können für die Einrichtungsteile in Fig.4 die gleichen Bezugszeichen wie beim Blockschema verwendet werden. In Fig.1 sind diese Einrichtungsteile 1, 2, 3 und 4 linear in Richtung der x-Achse angeordnet. Die Ausgangsstoffe des Verfahrens sind ein Kunststoff A (oder ein Monomer A) und ein Treibmittel B (gegebenenfalls inklusive ein oder mehrere Additive); das Produkt ist das herzustellende expandierfähige Kunststoff-Granulat C.

Fig. 1 stellt - als Einrichtung interpretiert - folgende Teile dar: Eine Kunststoffquelle 10 mit einem Reservoir 9 für A und einer Vorrichtung 11, in der eine gasfreie Kunststoffschmelze A' erzeugt wird; eine Treibmittelquelle 20 mit einem B enthaltenden Reservoir 19 und einer Vorrichtung 21, mit der B dosiert abgegeben werden kann; eine Steuereinheit 30, mit der die Menge von B an die Menge von A' abgestimmt abgegeben werden kann; schliesslich die Einrichtung 1, 2, 3, 4, in der das erfindungsgemässe Verfahren durchgeführt wird.

In der Dispergierstufe 1 wird unter erhöhtem Druck die Schmelze A' mit dem Treibmittel B vermischt, wobei die Schmelze einer hohen Scherung unterworfen wird, so dass das flüssige Teibmittel als feine Tropfen in der Schmelze dispergiert wird. Während einer vorgegebenen Verweilzeit in der Stufe 2 diffundiert das Treibmittel teilweise in die Schmelze. Die in den beiden ersten Stufen stattfindende Imprägnierung wird mit Vorteil bei einer Temperatur, die beträchtlich über der Erstarrungstemperatur der Schmelze liegt, durchgeführt. Denn je höher die Temperatur ist, desto geringer ist die Viskosität der Schmelze und desto besser erfolgt die Verteilung des Treibmittels in der Schmelze.

In der Abkühlungsstufe 3 wird die mit dem Treibmittel imprägnierte Schmelze auf eine Temperatur wenige °C über der Erstarrungstemperatur der Schmelze erniedrigt. Sodann wird das abgekühlte Gemisch in der letzten Stufe 4 in Granulatform übergeführt.

Damit keine Entmischung beim Durchgang durch die Einrichtung 1, 2, 3, 4 stattfindet, wird das Gemisch in allen Verfahrensstufen sowie bei den Übertritten von einer zur nachfolgenden Stufe in Bewegung gehalten; dies geschieht erfindungsgemäss unter Verwendung von statischen Mischelementen.

Die Kunststoffquelle 10 kann einen Polymerisations-Reaktor für die Herstellung des Kunststoffs A' aus einem monomeren Ausgangsstoff A sowie eine Entgasungseinrichtung für das Polymerisat umfassen. Die Kunststoffquelle 10 kann auch eine Rezykliereinrichtung für rezyklierten Thermoplast und eine Schmelzvorrichtung umfassen. Der Thermoplast soll vorzugsweise in sortenreiner Form vorliegen. Ferner kann als Kunststoffquelle auch eine Schmelzvorrichtung für einen granulatförmigen Thermoplast vorgesehen sein. Als Schmelzvorrichtung kommt beispielsweise ein beheizbarer Extruder in Frage.

Fig. 2 zeigt qualitativ den Verlauf des Drucks p in den vier Verfahrensstufen. Bei der Dispergierung, Intervall I, ist wegen der hohen Scherung der Druckabfall relativ gross, verglichen mit dem Druckabfall in der zweiten Stufe, Intervall II. Die Abkühlung, Intervall III, erfolgt wieder bei einem grösseren Druckabfall, der sich infolge von Massnahmen ergibt, einen effizienten Wärmetausch zu erzielen. In der Granulierstufe, Intervall IV, wird das Gemisch durch Düsen extrudiert, wobei der Druck sprungartig abfällt. Damit die gebildeten Stränge nicht durch das Treibmittel expandiert werden, muss das extrudierte Gemisch mit einem Kühlmittel, mit Vorteil Wasser, schlagartig abgekühlt werden.

Zwischen den Stufen 1 und 2 und/oder den Stufen 2 und 3 können Pumpen vorgesehen sein, mit denen der Druck jeweils wieder erhöht wird. Dies ist in Fig.3 illustriert, wo die Intervalle I' und II' solchen Massnahmen zuzuordnen sind.

Beim Ausführungsbeispiel, das in Fig.4 dargestellt ist, besteht die Kunststoffquelle 10 aus einem Polymerisations-Reaktor 12 für die Herstellung von Polystyrol aus dem monomeren Ausgangsstoff A (Styrol), einer Entgasungseinrichtung 14 für das Polymerisat und zwei Zahnradpumpen 13 und 15. Das Treibmittel B (beispielsweise n-Pentan) wird mit einer Kolben-Dosierpumpe 21 der Schmelze A' zugeführt.

Die Imprägnierung findet in der Einheit 1, 2 statt, bei einem Eingangsdruck von beispielsweise 100 bar (= 10 MPa) und einer Temperatur von rund 200 °C. Diese Einheit umfasst mit Vorteil einen ersten statischen Mischer, einen "Schermischer" 1, für die Dispergierung des Treibmittels und einen zweiten statischen Mischer, einen "Verweilzeitmischer" 2, der sich unmittelbar an den ersten anschliesst und der für den diffusiven Transport des Treibmittels in die Schmelzephase vorgesehen ist. (Die beiden Mischer 1 und 2 sind in Fig. 4 nicht als separate Komponenten dargestellt.) Im Schermischer 1 findet das Dispergieren bei hoher Scherung der Schmelze unter Ausbildung feiner Treibmitteltropfen statt. Die hohe Scherung erhält man durch eine grosse Strömungsgeschwindigkeit. Im Verweilzeitmischer 2 wird das Gemisch während einer für den diffusiven Transport benötigten Verweilzeit einer kleinen Scherung ausgesetzt. Die ungleichen Strömungsbedingungen in den beiden Mischern erhält man, indem man für den zweiten Mischer einen wesentlich grössern Querschnitt als für den ersten vorsieht.

Eine Zahnradpumpe 5 fördert die imprägnierte Schmelze in die Einheit 3, in der ein mit statischen Mitteln bewirkter Mischvorgang mit einem Wärmeaustausch kombiniert ist. Mit Vorteil wird eine Vorrichtung verwendet, wie sie aus der DE-A 28 39 564 bekannt ist: ein statischer Mischer, dessen sich kreuzende Stege als Wärmetauscherrohre ausgebildet sind. Der Druckabfall beträgt beispielsweise 100 bar und die Ausgangstemperatur rund 120 °C. Als Kühler kommt beispielsweise auch ein Rohrbündel-Wärmetauscher in Frage, in dessen einzelnen Rohren statische Mischelemente eingebaut sind.

Schliesslich wird die imprägnierte und abgekühlte Schmelze in einem Stranggranulator 4, der eine Düsenplatte, ein Kühlbad und eine Schneidvorrichtung umfasst (nicht dargestellt), in das gewünschte Produkt C, nämlich EPS, umgeformt. Der Druckabfall über der Düsenplatte ist mindestens 10 bar. Als Kühlbad ist ein kaltes Wasserbad (rund 10 °C) vorgesehen. Die aus den Düsen austretenden Stränge (Durchmesser kleiner als 1 mm) werden zunächst abgekühlt und anschliessend mit einem Mehrklingenmesser geschnitten. Das Produkt ist ein Granulat mit einheitlicher Grösse der Granulatkörner. Es ist daher - im Gegensatz zu der eingangs erwähnten Suspensionspolymerisation - das gesamte Produkt für die Herstellung von Schaumstoff nutzbar.

Als Granuliereinrichtung kommt neben dem Stranggranulator auch ein Heissabschlaggranulator oder ein sogenannter Unterwassergranulator in Frage. Mit dem Unterwassergranulator lässt sich ein Granulat gewinnen, dessen Körner praktisch die gleiche Form aufweisen wie die bei der Suspensionpolymerisation erzeugten Granulatkörner.

## Patentansprüche

1. Verfahren zum Herstellen von expandierfähigem Kunststoff-Granulat aus einer Kunststoffschmelze und einem fluiden Treibmittel, das bei erhöhtem Druck in einem vorgegebenen Druckbereich nur teilweise in der Schmelze lösbar ist, folgende Schritte umfassend:
- Dispergieren des Treibmittels in der Schmelze,
- Halten des Gemisches im vorgegebenen Druckbereich während einer vorgegebenen Verweilzeit,
- Abkühlen der mit dem Treibmittel imprägnierten Schmelze auf eine Temperatur, die wenige °C über der Erstarrungstemperatur der Schmelze liegt, und
- Granulieren des abgekühlten Gemisches,
welches Verfahren dadurch gekennzeichnet ist, dass das Dispergieren mittels statischer Mischelemente bei hoher Scherung der Schmelze unter Ausbildung feiner Treibmitteltropfen durchgeführt wird, dass das Gemisch im anschliessenden Verfahrensschritt während der vorgegebenen Verweilzeit mittels weiterer statischer Mischelemente einer kleinen Scherung ausgesetzt wird und dass beim Abkühlen des Gemisches eine Entmischung mit statischen Mischelementen verhindert wird, wobei das Imprägnieren in einem einzigen Apparat durchgeführt wird, in dem - um eine Entmischung zu verhindern - mittels der statischen Mischelemente während des ganzen Durchlaufs kontinuierlich auf das Gemisch eingewirkt wird.

2. Verfahren nach Anspruch 1, dadurch gekennzeichnet, dass das abgekühlte Gemisch durch Düsen extrudiert wird, wobei die gebildeten Stränge mit einem Kühlmittel, insbesondere Wasser, abgeschreckt und durch Zerkleinern in Granulatform gebracht werden.

3. Verfahren nach Anspruch 1 oder 2, dadurch gekennzeichnet, dass zusätzlich zum Treibmittel mindestens ein Additiv der Kunststoffschmelze zugemischt wird.

4. Einrichtung zum Herstellen von expandierfähigem Kunststoff-Granulat durch Imprägnieren einer Kunststoffschmelze (A') mit einem fluiden Treibmittel (B), einem Kühler (3) für die imprägnierte Schmelze sowie einem Granulator (5), gekennzeichnet durch erste statische Mischelemente womit das Treibmittel bei hoher Scherung in die Schmelze dispergierbar ist, weitere statische Mischelemente, womit dieses Gemisch bei kleiner Scherung haltbar ist und Wärmetauscherelemente, die als Einbauten eines statischen Mischers ausgebildet sind, womit das Gemisch kühlbar ist.

5. Einrichtung nach Anspruch 5, dadurch gekennzeichnet, dass ein erster statischer Mischer (1) für die Dispergierung des Treibmittels und ein zweiter statischer Mischer (2), der sich unmittelbar an den ersten anschliesst, für die weitere Imprägnierung vorgesehen sind.

6. Einrichtung nach Anspruch 4 oder 5, dadurch gekennzeichnet, dass der Kühler (3) ein statischer Mischer ist, dessen sich kreuzende Stege als Wärmetauscherrohre ausgebildet sind.

7. Einrichtung nach einem der Ansprüche 4 bis 6, dadurch gekennzeichnet, dass der Granulator (4) eine Düsenplatte, ein Kühlbad und eine Schneidvorrichtung umfasst.

8. Einrichtung nach einem der Ansprüche 4 bis 7, dadurch gekennzeichnet, dass zwischen den Mischern (1, 2) für das Imprägnieren der Kunststoffschmelze und dem Kühler (3) eine Schmelzepumpe (5), insbesondere eine Zahnradpumpe, vorgesehen ist.

9. Einrichtung nach einem der Ansprüche 4 bis 8, zusätzlich folgende Teile umfassend:
- eine Kunststoffquelle (10), in der die Kunststoff-Schmelze (A') erzeugbar ist,
- eine Treibmittelquelle (20), mit der eine dosierte Abgabe von Treibmittel (B) ausführbar ist und
- eine Steuereinheit (30) zur gesteuerten, auf den Schmelzestrom abgestimmten Abgabe des Treibmittels.

10. Einrichtung nach Anspruch 9, dadurch gekennzeichnet, dass die Kunststoffquelle (10) einen Polymerisations-Reaktor (12) für die Herstellung des Kunststoffs aus einem monomeren Ausgangsstoff (A) sowie eine Entgasungseinrichtung (14) für das Polymerisat (A') umfasst.

11. Einrichtung nach Anspruch 9, dadurch gekennzeichnet, dass die Kunststoffquelle (10) eine Rezykliereinrichtung für rezyklierten, insbesondere sortenreinen Thermoplast, und eine Schmelzvorrichtung, insbesondere einen beheizbaren Extruder, umfasst.

12. Einrichtung nach Anspruch 9, dadurch gekennzeichnet, dass die Kunststoffquelle (10) eine Schmelzvorrichtung, insbesondere ein beheizbarer Extruder, für einen granulatförmigen Thermoplast ist.

13. Verwendung einer Einrichtung nach Anspruch 9 zur Herstellung von "expandierbarem Polystyrol", EPS, aus neu erzeugtem oder rezykliertem Polystyrol, wobei als Treibmittel (B) vorzugsweise ein niedrigsiedender Kohlenwasserstoff, insbesondere Pentan, oder ein Gemisch solcher Kohlenwasserstoffe verwendet wird.

## Claims

1. A process for the preparation of expandable plastic granules from a plastic liquified material and a fluid foaming agent, which on increased pressure in a pre-determined pressure range, is only partially soluble in the liquified material and which encompasses the following steps:
- dispersion of the foaming agent in the liquified material,
- holding the mixture in the pre-determined pressure range during a pre-determined retention time,
- cooling the liquified material, impregnated with the foaming agent, to a temperature which is a few °C above the solidification temperature of the liquified material, and
- granulation of the cooled mixture, whose process is characterised in that dispersion is carried out by means of static mixing elements having a high shearing action on the liquified material, forming fine foaming agent droplets,
that the mixture is exposed to a smaller shearing action in the subsequent process step by means of further static mixing elements, and that on cooling the mixture, separation is prevented by the static mixing elements and where impregnation is carried out in a single apparatus where - so as to prevent separation - the mixture is continuously acted on during the whole process by the static mixing elements.

2. A process according to claim 1, characterised in that the cooled mixture is extruded through nozzles, where the strands formed are chilled with a coolant, in particular water, and are formed into granules through comminution.

3. A process according to claims 1 or 2, characterised in that in addition to the foaming agent, at least one additive is added to the plastic liquified material.

4. A device for preparing expandable plastic granules through impregnation of a plastic liquified material (A') with a fluid foaming agent (B), a cooler (3) for the impregnated liquified material likewise a granulator, characterised by a first static mixing element, with which the foaming agent is dispersed in the liquified material with a high shearing action, a further static mixing element with which this mixture can be held by a smaller shearing action, and a heat exchanger element which is constructed as a static mixer, and with which the mixture can be cooled.

5. A device according to claim 5, characterised in that a first static mixer (1) for dispersing the foaming agent and a second static mixer (2), which is directly connected to the first one, which are provided for further impregnation.

6. A device according to claims 4 or 5, characterised in that the cooler (3) is a static mixer, whose crossing rods are constructed as heat exchanger tubes.

7. A device according to claims 4-6, characterised in that granulator (4) encompasses a nozzle plate, a cooling bath and a cutting device.

8. A device according to claims 4-7, characterised in.that a liquified material pump (5), in particular a gear wheel pump, is provided between the mixers (1,2) for impregnating the plastic liquified material, and the cooler (3).

9. A device according to any of claims 4-8, additional following parts encompass:
- a plastic material source (10) can be produced in the plastic liquified material (A'),
- a foaming agent source (20) with which a measured delivery of foaming agent (B) can be carried out and
- a control unit (30) for controlling the delivery of foaming agent co-ordinated with the liquified material flow.

10. A device according to claim 9, characterised in that the plastic source (10) encompasses a polymerisation reactor (12) for producing plastic material from a monomer starting material (A), likewise a de-gassing device (14) for the polymerisate (A').

11. A device according to claim 9, characterised in that the plastic source (10) encompasses a recycling device for recycled thermoplastic, in particular pure forms of thermoplastic, and a liquifying material device, in particular a heatable extruder.

12. A device according to claim 9, characterised in that plastic source (10) is a liquifying material device, in particular a heatable extruder, for a granulated thermoplastic.

13. Use of a device according to claim 9 for preparing "expanded polystyrene", EPS, from newly produced or recycled polystyrene, and where preferably a low boiling hydrocarbon, in particular pentane, or a mixture of such hydrocarbons is used as a foaming agent (B).

## Revendications

1. Procédé de fabrication de granulés expansibles en matière synthétique à partir d'une masse fondue de matière synthétique et d'un agent de propulsion fluide, qui est soluble à une pression augmentée dans une zone de pression prédéterminée seulement partiellement dans la masse fondue, comprenant les étapes suivantes :
- dispersion de l'agent de propulsion dans la masse fondue,
- maintien du mélange dans la zone de pression prédéterminée pendant une durée de séjour prédéterminée,
- refroidissement de la masse fondue imprégnée avec l'agent de propulsion à une température qui se situe quelques °C au-dessus de la température de solidification de la masse fondue et
- granulation du mélange refroidi,
le procédé étant caractérisé en ce que la dispersion est effectuée au moyen d'éléments de mélange statiques sous un cisaillement élevé de la masse fondue en formant de fines gouttelettes d'agent de propulsion, en ce que le mélange, à l'étape de procédé suivante, pendant la durée de séjour prédéterminée, est exposé au moyen d'autres éléments de mélange statiques à un petit cisaillement et en ce que lors du refroidissement du mélange, une séparation est empêchée avec des éléments de mélange statiques, où l'imprégnation a lieu dans un seul appareil dans lequel, pour éviter une séparation, il est agi, au moyen des éléments de mélange statiques, pendant tout le passage, continuellement sur le mélange.

2. Procédé selon la revendication 1, caractérisé en ce que le mélange refroidi est extrudé à travers des filières, où les boudins formés sont refroidis brusquement avec un agent de refroidissement, notamment avec de l'eau et sont amenés par un fractionnement en une forme de granulés.

3. Procédé selon la revendication 1 ou 2, caractérisé qu'en plus de l'agent de propulsion, au moins un additif est ajouté, en le mélangeant, à la masse fondue de matière synthétique.

4. Dispositif de fabrication de granulés expansibles en matière synthétique par imprégnation d'une masse fondue de matière synthétique (A') avec un agent de propulsion fluide (B), un appareil de refroidissement (3) pour la masse fondue imprégnée ainsi qu'un granulateur (5), caractérisé par des premiers éléments statiques, au moyen desquels l'agent de propulsion, sous cisaillement élevé, peut être dispersé dans la masse fondue, d'autres éléments de mélange statiques, au moyen desquels ce mélange peut être maintenu sous un petit cisaillement et des éléments d'échangeur de chaleur qui sont réalisés comme éléments à incorporer dans un mélangeur statique, au moyen desquels le mélange peut être refroidi.

5. Dispositif selon la revendication 4, caractérisé en ce que sont prévus un premier mélangeur statique (1) pour la dispersion de l'agent de propulsion et un deuxième mélangeur statique (2) qui fait suite directement au premier, pour l'imprégnation ultérieure.

6. Dispositif selon la revendication 4 ou 5, caractérisé en ce que l'appareil de refroidissement (3) est un mélangeur statique dont les barrettes qui se croisent sont réalisées sous forme de tubes d'échangeur de chaleur.

7. Dispositif selon l'une des revendications 4 à 6, caractérisé en ce que- le granulateur (4) comporte un corps de filières, un bain de refroidissement et un dispositif de coupe.

8. Dispositif selon l'une des revendications 4 à 7, caractérisé en ce qu'il est prévu entre les mélangeurs (1, 2) pour l'imprégnation de la masse fondue de matière synthétique et l'appareil de refroidissement (3) une pompe de fusion (5), notamment une pompe à engrenages.

9. Dispositif selon l'une des revendications 4 à 8, comportant additionnellement les parties suivantes :
- une source de matière synthétique (10) dans laquelle peut être produite la masse fondue de matière synthétique (A'),
- une source d'agent de propulsion (20), avec laquelle est réalisable une émission dosée d'agent de propulsion (B) et
- une unité de commande (30) pour l'émission commandée, accordée au flux de matière fondue, de l'agent de propulsion.

10. Dispositif selon la revendication 9, caractérisé en ce que la source de matière synthétique (10) comporte un réacteur de polymérisation (12) pour la fabrication de la matière synthétique à partir d'un matériau de départ monomère (A) ainsi qu'un dispositif de dégazage (14) pour le produit de polymérisation (A').

11. Dispositif selon la revendication 9, caractérisé en ce que la source de matière synthétique (10) comporte un dispositif de recyclage pour une matière thermoplastique recyclée, notamment d'un seul type, et un dispositif de fusion, notamment une extrudeuse apte à être chauffée.

12. Dispositif selon la revendication 9, caractérisé en ce que la source de matière synthétique (10) est un dispositif de fusion, notamment une extrudeuse apte à être chauffée pour une matière thermoplastique en forme de granulés.

13. Utilisation d'un dispositif selon la revendication 9 pour la fabrication de "polystyrène expansible", EPS, à partir de polystyrène produit nouvellement ou recyclé, où est utilisé comme agent de propulsion (B) de préférence un hydrocarbure à bas point d'ébullition, notamment du pentane, ou un mélange de tels hydrocarbures.
